# EUROPÄISCHE PATENTSCHRIFT

(11) **EP 2 027 003 B1**
(45) Veröffentlichungstag und Bekanntmachung des Hinweises auf die Patenterteilung: **02.02.2011**
(21) Anmeldenummer: 08734340.6
(22) Anmeldetag: 29.02.2008
(51) Int. Cl.: B61G 5/02

(54) **GELENK ZWISCHEN ZWEI GELENKIG MITEINANDER VERBUNDENEN FAHRZEIGTEILEN, Z.B. EINES GELENKFAHRZEUGS, AUFWEISEND EIN KNICKGELENK**
JOINT BETWEEN TWO VEHICLE COMPONENTS JOINED TO EACH OTHER WITH A HINGE, SUCH AS OF AN ARTICULATED VEHICLE, COMPRISING AN ARTICULATED JOINT
ARTICULATION ENTRE DEUX PARTIES DE VÉHICULE CONNECTÉES DE FAÇON ARTICULÉE, PAR EXEMPLE D'UN VÉHICULE ARTICULÉ, PRÉSENTANT UNE ARTICULATION PIVOTANTE

(30) Priorität: 02.04.2007 DE 102007015906; 13.10.2007 DE 202007014350 U
(43) Veröffentlichungstag der Anmeldung: 25.02.2009
(73) Patentinhaber: Hübner GmbH, 34123 Kassel (DE)
(72) Erfinder: KOCH, Robert, 37242 Bad Sooden-Allendorf (DE); SCHARF, Lothar, 37242 Bad Sooden-Allendorf (DE)
(74) Vertreter: Walther, Walther & Hinz GbR
(86) Internationale Anmeldenummer: PCT/DE2008/000366
(87) Internationale Veröffentlichungsnummer: WO 2008/119315

(56) Entgegenhaltungen:
- DE-A1- 10 360 289
- DE-B- 1 133 749
- GB-A- 2 295 130

## Beschreibung

Die vorliegende Erfindung betrifft ein Gelenk zwischen zwei gelenkig miteinander verbundenen Fahrzeugteilen, z. B. eines Gelenkfahrzeugs, aufweisend ein Knickgelenk.

Ein aus mehreren Teilen kuppelbares Gelenkfahrzeug ist aus dem Stand der Technik hinreichend bekannt. Die Teile eines solchen Gelenkfahrzeugs sind durch eine Gelenkverbindung miteinander gekuppelt. Die Gelenkverbindung wird durch einen Balg überspannt, wobei zum Hinüberwechseln von Personen von dem einen Fahrzeugteil zu dem anderen Fahrzeugteil eine Übergangsbrücke vorgesehen ist.

Bekanntermaßen werden Gelenkzüge oder auch Gelenkfahrzeuge den verschiedensten Bewegungsarten unterworfen. So müssen die Gelenke in der Lage sein, sowohl Wank-, Nick- als auch Knickbewegungen aufzunehmen. Der Begriff des Gelenkes umfasst im vorliegenden Fall die gesamte gelenkige Anordnung zwischen zwei Fahrzeugteilen. Unter Wankbewegungen versteht man solche Bewegungen, bei denen sich die beiden Fahrzeugteile relativ zueinander um die Längsachse verdrehen. Knickbewegungen sind solche, die auftreten, wenn das Gelenkfahrzeug mit den beiden Fahrzeugteilen um eine Kurve fährt, wohingegen Nickbewegungen entstehen, wenn ein solcher Gelenkzug durch eine Senke oder über eine Kuppe fährt.

Zum Durchfahren von Kurven und z. B. zum Durchfahren von Senken weist eine bekannte Gelenkverbindung zwischen den Fahrzeugteilen ein Knick-und ein Nickgelenk auf. Bei dem Nickgelenk handelt es sich um ein solches, das eine Bewegung der beiden Fahrzeugteile relativ zueinander um eine Achse quer zur Längsachse des Fahrzeugs ermöglicht. Üblicherweise sind die hierbei vorgesehenen Nicklager als Metallgummilager ausgebildet.

Bislang ist nun davon ausgegangen worden, dass auf Grund der Eigenelastizität der Chassis der jeweiligen Fahrzeugteile die Wankbewegungen von dem Chassis selbst aufgenommen werden. Zu dieser Annahme bestand insbesondere deshalb Veranlassung, weil die Wankwinkel maximal 3° betragen. Es hat sich allerdings zwischenzeitlich herausgestellt, dass selbst bei solchen verhältnismäßig geringen Wankwinkeln Momente von bis zu 35 kNm auf das Gelenk bzw. auch auf das Chassis wirken. Insofern sind Beschädigungen an Chassis und/oder Gelenk nicht auszuschließen. Insbesondere auch das Knickgelenk, das für einen Gelenkzug die Möglichkeit eröffnet, Kurven zu durchfahren, ist starken Belastungen ausgesetzt. Dies spiegelt sich dadurch wider, dass im Bereich des Knickgelenkes Wälzlager erheblicher Dimensionen eingebaut werden müssen, die schlussendlich nicht nur die Aufsattellast zwischen den Wagenteilen übertragen, sondern darüber hinaus auch in der Lage sind, bei den bereits erläuterten Wankbewegungen die entsprechend auftretenden Kräfte zu übertragen.

In diesem Zusammenhang ist nun bereits in der DE 10 2006 050 210.8 beschrieben, das Knickgelenk, das Bestandteil des Gelenks ist, durch eine Gelenkanordnung zur Übertragung von Nick- und Wankbewegungen mit dem einen Fahrzeugteil zu verbinden. Das heißt, das Gelenk umfasst zwei Gelenkelemente, nämlich ein Knickgelenk und ein solches weiteres Gelenkelement, das Nick- und Wankbewegungen überträgt. Dadurch, dass eine solche Gelenkanordnung nunmehr die Übertragung von Nick- und Wankbewegungen ermöglicht, können sowohl die Belastungen auf die Chassis der beiden Fahrzeugteile als auch auf das Gelenk selbst vermindert werden. Dies deshalb, weil schlussendlich durch das Knickgelenk lediglich die Aufsattellast und die Zugkraft sowie ein geringes Wankmoment von <10KNm übertragen werden muss. Bislang ist es so, dass das Knickgelenk Wälzlager erheblicher Dimensionen aufweist. In Anbetracht der Tatsache, dass die auf das Knicklager einwirkenden Kräfte durch die gefundene Gelenkkonstruktion nunmehr wesentlich geringer sind, können auch andere Lager eingesetzt werden, die erheblich preiswerter sind, als die bislang verwendeten, sehr groß dimensionierten Wälzlager.

Darüber hinaus ist aus der DE 11 33 749 ein Knicklager bekannt, bei dem zwei übereinander angeordnete Gabeln vorgesehen sind, die als ein Teil des Knickgelenks zwischen den Gabeln jeweils eine Lagerplatte des anderen Teils des Knickgelenks aufnehmen. Zur Verbindung der jeweiligen Gabel und der Lagerplatte sind durchgehende Schraubbolzen vorgesehen. Bei einer der beiden Gabeln sind hierbei jeweils zwischen Gabelschenkel und Lagerplatte sogenannte Passscheiben vorgesehen, die ähnlich sogenannter Anlaufscheiben fungieren. Hierbei werden die Gelenkschenkel gegen die Passscheiben verspannt. Die Folge hiervon ist, dass die Passscheiben ungleichmäßig belastet werden, da die Schenkel der Gabel nach der Verspannung durch den Schraubbolzen leicht konisch zulaufen werden, da die Gabeln aus einem Teil bestehen. Hierbei entsteht eine Kantenpressung auf die Passscheiben, was zu einem vorzeitigen Verschleiß des Lagers führt.

Erfindungsgemäß ist insofern vorgesehen, dass das Knickgelenk zwei Gelenksegmente umfasst, die um eine als vertikale Achse wirkende Spanneinrichtung drehbar miteinander verbunden sind, wobei das erste Gelenksegment eine U-förmige, maulartige Öffnung zum Erfassen des anderen, zweiten Gelenksegments im Bereich der vertikalen Achse aufweist, wobei zwischen den Gelenksegmenten zumindest in axialer Richtung, also in Richtung der Gelenkachse wirkende Gleiteinrichtungen vorgesehen sind, wobei die Spanneinrichtung Mittel zur Erzeugung einer Vorspannung auf die Gelenksegmente aufweist, wobei das eine Gelenksegment zwei Gelenksegmentelemente aufweist, die gesondert jeweils an dem Rahmen des Fahrzeugteils durch Schrauben befestigt sind. Wesentlich hierbei ist nun zum einen, dass zur Übertragung der Relativbewegung zwischen den beiden Gelenksegmenten des Knickgelenkes Gleiteinrichtungen vorgesehen sind. Um Gleiteinrichtungen auf Dauer wirksam zu halten, ist es notwendig, dass sich die Gelenksegmente, zwischen denen sich die Gleiteinrichtungen befinden, relativ zueinander spielfrei bewegen. Das heißt, durch die gesonderte Befestigung der Gelenksegmentelemente ist es möglich, die Gleiteinrichtungen spielfrei einzustellen. Zum anderen wird durch die gesonderte Befestigung der Gelenksegmentelemente am Rahmen nicht die Gefahr der Verspannung der Gelenksegmentelemente relativ zum zweiten Gelenksegment bewirkt. Dies deshalb, weil zunächst das erste und zweite Gelenksegment miteinander verbunden werden und erst dann die Verbindung mit dem jeweiligen Fahrzeugteil erfolgt. Durch entsprechende Langlöcher am Rahmen des Fahrzeugs besteht hierdurch eine gewisse Variabilität.

Für die Spaltfreiheit ist gemäß der Lehre der Erfindung eine Spanneinrichtung vorgesehen, die Mittel zur Erzeugung einer Vorspannung auf die Gelenksegmente aufweist. Hieraus wird deutlich, dass selbst dann, wenn sich die Gleiteinrichtungen im Laufe der Zeit abnutzen, durch die Vorspannung die Spielfreiheit auf Dauer gewährleistet wird.

Zur Erzeugung der Vorspannung ist im Einzelnen nunmehr vorteilhaft vorgesehen, dass die Spanneinrichtung eine Achshülse und eine Kontermutter umfasst, wobei die Achshülse mit der Kontermutter durch vorzugsweise einen Schraubbolzen verbunden ist, wobei durch den vorzugsweise einen Schraubbolzen die beiden Gelenksegmente gegen die Kraft einer Federeinrichtung vorspannbar sind. Die Achshülse fungiert hierbei als Achse für das Knickgelenk, um die sich herum die beiden Gelenksegmente relativ zueinander bewegen. Um die entsprechende Druckkraft in axialer Richtung der Achshülse auf die Gelenksegmente aufbringen zu können, ist nach einem weiteren Merkmal der Erfindung vorgesehen, dass die Achshülse einen Bund aufweist, der auf das eine erste Gelenksegment wirkt, und dass die Mutter korrespondierend einen entsprechenden Bund aufweist, der von der anderen Seite auf dieses eine erste Gelenksegment wirkt.

Nach einem weiteren Merkmal der Erfindung weist die Achshülse auf der Innenmantelfläche einen umlaufenden Steg zur Auflage für den Kopf des Schraubbolzens auf. Hierdurch wird erreicht, dass die Spanneinrichtung im Wesentlichen oberflächenbündig mit der Oberfläche des ersten Gelenksegmentes abschließt.

Nach einer ersten Ausführungsform ist nun vorgesehen, dass das zweite Gelenksegment im Bereich der Spanneinrichtung auf der Ober- und Unterseite einen kreisringförmigen Absatz zur Aufnahme jeweils einer Druckscheibe aufweist, wobei die Druckscheibe durch mindestens eine, aus Gleichgewichtsgründen auch vorzugsweise drei, auf dem Umfang gleichmäßig verteilte Federeinrichtungen in Richtung auf das erste Gelenksegment zu pressbar sind, wobei zwischen Druckscheibe und dem ersten Gelenksegment eine Gleiteinrichtung vorgesehen ist. Durch die Druckscheibe in Verbindung mit der Federeinrichtung, durch die die Druckscheibe in Richtung auf die Gleiteinrichtung, beispielsweise eine Anlaufscheibe aus z. B. PTFE oder Ähnlichem, gedrückt wird, wird errecht,

dass die beiden Gelenksegmente im Prinzip immer spielfrei miteinander verbunden sind. D. h. die Vorrichtung ist insofern selbsttätig nachstellend, was bedeutet, dass ein Verschleiß an der Anlaufscheibe durch die Spanneinrichtung und hier speziell durch die Federeinrichtung kompensiert wird. Wie bereits ausgeführt, ist die Druckscheibe durch eine Federeinrichtung in Richtung auf das erste Gelenksegment zu gepresst. Die Federeinrichtung umfasst in diesem Fall mehrere umfangsverteilt angeordnete Tellerfederpakete, wobei ein jedes Tellerfederpaket insbesondere durch einen Führungsbolzen geführt ist. Hierdurch wird erreicht, dass durch die Druckscheibe die als Gleiteinrichtung ausgebildete Anlaufscheibe gleichmäßig belastet und damit gleichmäßig auf das erste Gelenksegment zu gedrückt wird. Das Tellerfederpaket sitzt in einem Nest ein, wobei sich das Nest unter der Druckscheibe befindet. Der Führungsbolzen, der in dem Nest angeordnet ist, sorgt dafür, dass das Tellerfederpaket geführt ist, und dass die Druckscheibe nicht drehen kann.

Die als Anlaufscheibe ausgebildete Gleiteinrichtung überträgt die Kräfte in Achsrichtung der Spanneinrichtung. Dies sind im Wesentlichen Momente auf Grund der Aufsattellast, allerdings auch geringe Wankmomente. Um Brems- und Beschleunigungskräfte ebenfalls übertragen zu können, ist zwischen der Achshülse und dem zweiten Gleitsegment eine sogenannte Gleitbuchse vorgesehen. Diese Gleitbuchse kann aus dem gleichen Material hergestellt sein, wie die als Gleiteinrichtung ausgebildete Anlaufscheibe.

Eine zweite Ausführungsform zeichnet sich dadurch aus, dass zwischen Schraubbolzen und Steg auf der Innenmantelfläche der Achsehülse eine Federeinrichtung angeordnet ist. Eine Federeinrichtung, die insbesondere als Tellerfederpaket ausgebildet ist, bewirkt, dass das erste Gelenksegment im Bereich der maulartigen Öffnung dieses ersten Gelenksegments auf das zweite Gelenksegment zu gepresst erhalten wird. In diesem Zusammenhang ist auf Folgendes hinzuweisen:

Das erste Gelenksegment umfasst zur Bildung der maulartigen, U-förmigen Öffnung im Einzelnen ein oberes und ein unteres Gelenksegmentelement. Diese beiden Gelenksegmentelemente werden an dem Rahmen des Chassis angeschraubt, wobei vorher die Lagerung zusammengebaut wird. Hieraus folgt unmittelbar, dass, um eine Spielfreiheit zwischen den beiden Gelenksegmenten zu erzeugen, sowohl durch den Schraubbolzen als auch durch das Tellerfederpaket die Eigenelastizität des ersten Gelenksegments überwunden werden muss, was insbesondere schwierig ist, wenn die Anlenkung an dem Rahmen dieser Gelenksegmentelemente, die das erste Gelenksegment bilden, im Wesentlichen durch eine starre Verbindung erfolgt. Hierin liegt der Vorteil der ersten Ausführungsform zur zweiten Ausführungsform, denn dort hat auf die Spielfreiheit die Steifigkeit des ersten Gelenksegments keinen Einfluss.

Bei der zweiten Variante ist nun des Weiteren, wie auch bei der ersten Ausführungsform, vorgesehen, dass die zwischen den Gelenksegmenten angeordneten Gleiteinrichtungen als Anlaufscheiben ausgebildet sind, wobei zwischen der Achshülse und dem zweiten Gelenksegment ebenfalls eine Gleithülse vorgesehen ist.

Bei der dritten Ausführungsform sind zwei sogenannte sphärische Lager als Gleiteinrichtungen vorgesehen. Ein solches sphärisches Lager zeichnet sich dadurch aus, dass es als Gleitlager ausgebildet ist und zwei Lagerschalen aufweist, wobei die beiden Lagerschalen bogenförmig ausgebildete, aneinander anliegende Gleitflächen aufweisen. Durch die bogenförmige Kontur der Lagerschalen wird erreicht, dass ein solches Lager sowohl Kräfte in radialer als auch in axialer Richtung aufnehmen kann. Viel wesentlicher ist allerdings, dass ein solches sphärisches Lager in der Lage ist, einen spielfreien Betrieb der beiden durch ein solches sphärisches Lager verbundenen Bauelemente zu gewährleisten.

Für den vorliegenden Fall der Erfindung bedeutet dies, dass zur Erzeugung der Spielfreiheit die zwei in Achsrichtung einander gegenüberliegende Lagerschalen der beiden Gleitlager unter der Kraft einer Feder stehen, wodurch ein solches sphärisches Lager vom Grundsatz her selbst nachstellend ist, d. h., dass der Verschleiß an den beiden aneinander anliegenden Lagerschalen eines jeden sphärisches Lagers durch die Federkraft kompensiert oder ausgeglichen wird.

Um diesen Nachstellprozess zu ermöglichen, ist vorgesehen, dass das durch Federkraft beaufschlagte Gleitlager als Loslager, während das andere Gleitlager als Festlager ausgebildet ist. Das Loslager ist durch eine Passfeder gegen Verdrehen gesichert.

Im Einzelnen ist hierbei vorgesehen, dass sich die eine Lagerschale des sphärischen Lagers an dem einen Gelenksegment abstützt, wohingegen die andere Lagerschale des sphärischen Lagers an dem anderen Gelenksegment anliegt. Die insbesondere als Federpaket ausgebildeten Tellerfedern wirken auf die beiden in Achsrichtung, d. h. in Längsrichtung der Drehachse, einander gegenüberliegenden Lagerschalen eines jeden sphärischen Lagers und pressen somit die beiden Lagerschalen eines jeden sphärischen Lagers aneinander, wobei durch die bogenförmige Kontur gewisse Verschleißerscheinungen im Laufe des Betriebes kompensiert werden.

Allen Ausführungsvarianten ist gemein, dass die Achshülse an dem ersten Gelenksegment unverdrehbar festgelegt ist, was ebenso für die Kontermutter gilt. Das heißt, es soll hierdurch sichergestellt sein, dass sich tatsächlich nur das zweite Gelenksegment relativ zum ersten Gelenksegment verdrehen kann.

Anhand der Zeichnungen wird die Erfindung nachstehend beispielhaft näher erläutert.
- Figur 1: zeigt eine Übersichtzeichnung über das Gelenk zwischen zwei Fahrzeugteilen;
- Figur 2: zeigt eine erste Ausführungsform eines Knickgelenks;
- Figur 3: zeigt eine zweite Ausführungsform eines Knickgelenks;
- Figur 4: zeigt eine dritte Ausführungsform eines Knickgelenks.

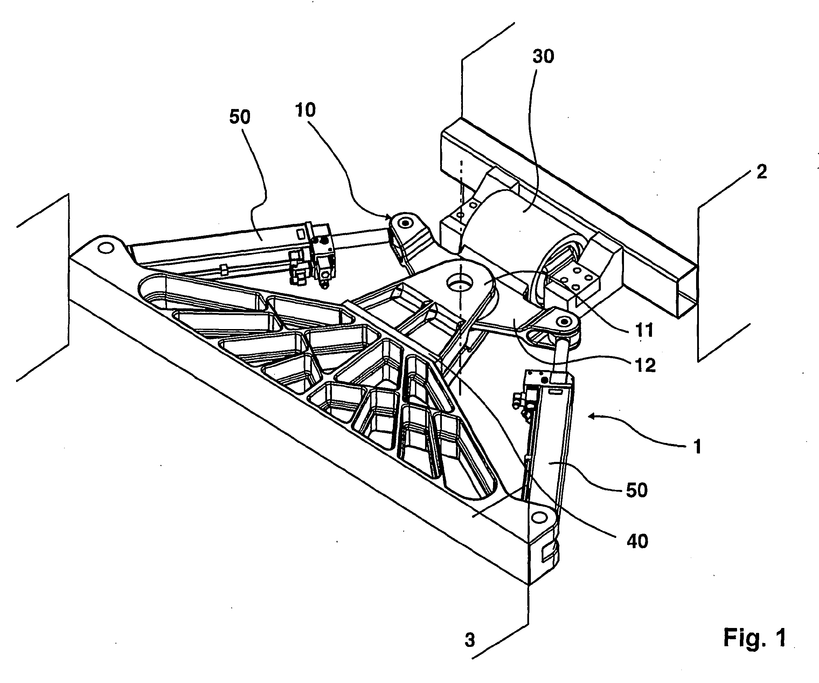

Figur 1 zeigt das Gelenk 1 zwischen den beiden Fahrzeugteilen 2, 3. Das Gelenk 1 umfasst im Einzelnen das mit 10 bezeichnete Knickgelenk und das zwischen Knickgelenk und Fahrzeugteil 2 angeordnete Nick-/Wanklager 30. Das Knickgelenk 10 ist zum Fahrzeugteil 3 hin durch einen Rahmen 40 verbunden, wobei zwischen dem Knickgelenk 10 und dem Rahmen 40 Dämpfer 50 vorgesehen sind. Das Knickgelenk dreht sich um die Achse 60.

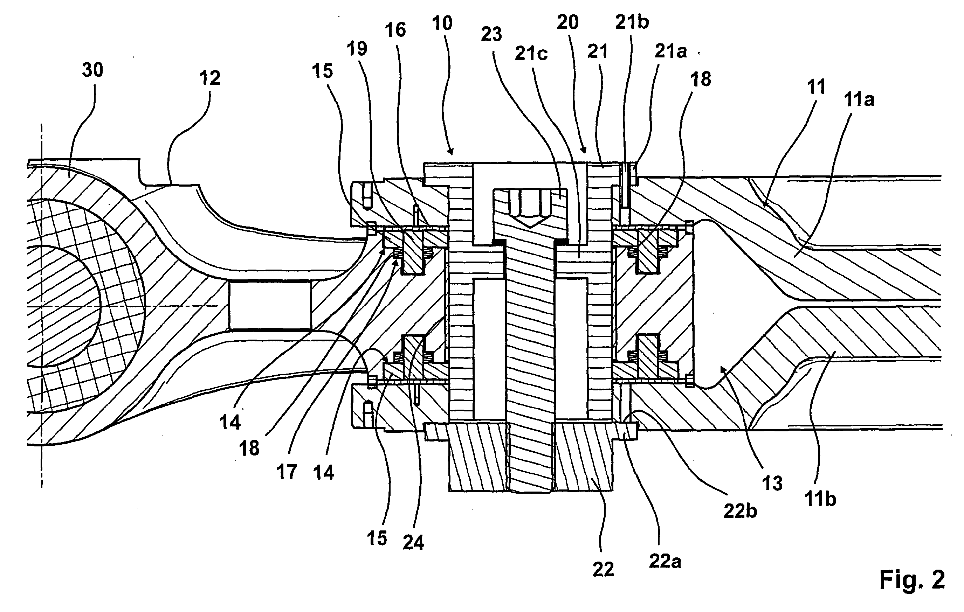

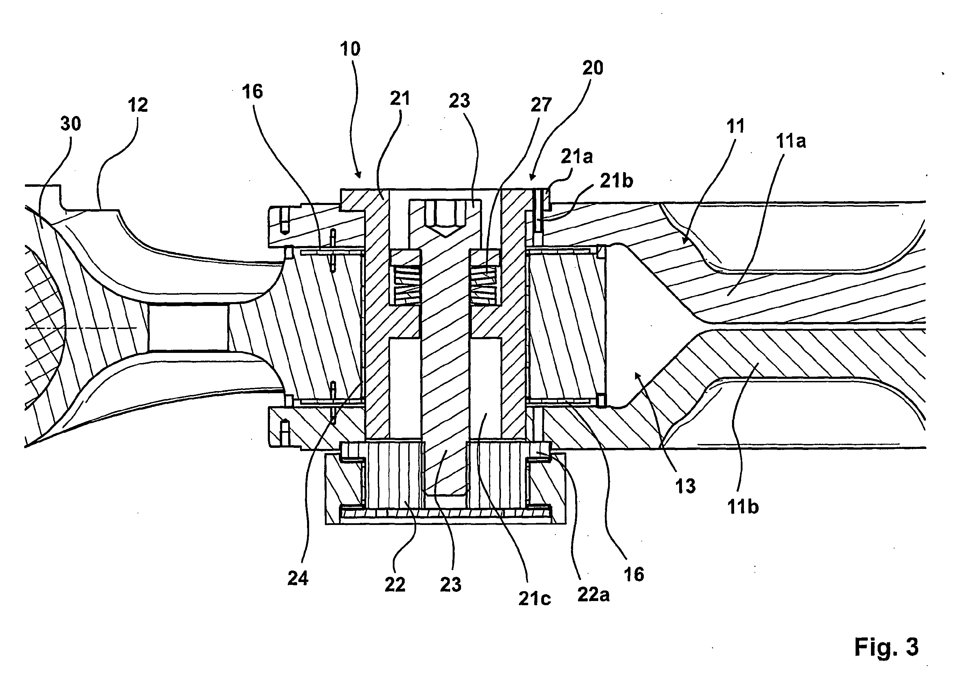

Gegenstand der Erfindung ist nun die Ausbildung des Knickgelenkes 10. Das Knickgelenk 10 umfasst bei beiden Varianten gemäß den Figuren 2 und 3 das eine erste Gelenksegment 11 und das zweite Gelenksegment 12. Das erste Gelenksegment 11 besitzt eine U-förmige, maulartige Öffnung 13, die der Aufnahme des anderen, zweiten Gelenksegments 12 dient. Das eine erste Gelenksegment 11 umfasst die beiden Gelenksegmentelemente 11 a und 11 b, die jeweils an dem Rahmen 40 durch Schrauben (nicht dargestellt) befestigt sind.

Zur Verbindung der beiden Gelenksegmente 11, 12 ist nunmehr die mit 20 bezeichnete Spanneinrichtung vorgesehen; die auch die Dreh- oder Gelenkachse bildet. Die mit 20 bezeichnete Spanneinrichtung umfasst die Achshülse 21 und die Kontermutter 22, wobei die Achshülse 21 mit der Kontermutter 22 durch den Schraubbolzen 23 in Verbindung steht. Sowohl die Achshülse 21 als auch die Kontermutter 22 besitzen jeweils einen Bund 21 a, 22a, mit dem sich sowohl die Kontermutter als auch die Achshülse auf der Unter- und auch auf der Oberseite des Gelenksegmentes 11 abstützen, wie sich dies sowohl aus der Figur 2 als auch aus der Figur 3 ergibt. Sowohl die Achshülse 21 als auch die Kontermutter 22 sind durch Stifte 21 b, 22b an dem Gelenksegment 11 undrehbar festgelegt. Hierdurch soll sichergestellt sein, dass eine Relativbewegung tatsächlich lediglich zwischen den beiden Gelenksegmenten 11, 12 stattfindet.

Zur Verbindung des Schraubbolzens 23 mit der Kontermutter 22 besitzt die Achshülse auf ihrer Innenmantelfläche einen umlaufenden Steg 21c, auf dem sich der Kopf des Schraubbolzens 23 abstützt. Zwischen der Stirnseite des zweiten Gleitsegmentes 12 und der Achshülse 21 ist eine Gleitbuchse 24 vorgesehen. Diese Gleitbuchse 24 überträgt Beschleunigungs- und Bremskräfte beim Anfahren und Bremsen des Fahrzeugs.

Bei der Ausführungsform gemäß Figur 2 ist nunmehr zur Übertragung sowohl der Aufsattellast sowie der geringen Wankmomente, als auch zur Ermöglichung der Drehbewegung der beiden Gelenksegmente 11, 12 relativ zueinander Folgendes vorgesehen: Das zweite Gelenksegment 12 weist den kreisringförmigen Absatz 14 auf. In diesem kreisringförmigen Absatz 14 lagert die mit 15 bezeichnete Druckscheibe. Über der Druckscheibe befindet sich die Anlaufscheibe 16, z. B. aus PTFE, die als Gleiteinrichtung fungiert, die an der inneren Fläche der maulartigen Öffnung des Gelenksegmentes 11 befestigt ist. Unterhalb der Druckscheibe 15 sind mehrere umfangsverteilt angeordnete nestartige Aussparungen 17 zur Aufnahme einzelner Tellerfederpakete 18 vorgesehen. Durch diese Tellerfederpakete 18, die jeweils durch einen Führungsbolzen 19 geführt sind, wird die Druckscheibe 15 der darauf aufliegenden Anlaufscheibe gegen die Anlaufscheibe 16 am Gelenksegment 11 gepresst, wie sich dies unmittelbar aus Figur 2 ergibt.

Durch die Tellerfederpakete wird insofern bewirkt, dass zwischen den beiden Gelenksegmenten 11, 12 immer eine spielfreie, aber relativ zueinander drehbare Verbindung besteht.

Die Ausführungsform gemäß Figur 3 unterscheidet sich von der Ausführungsform gemäß Figur 2 dadurch, dass dort die Vorspannung durch ein Federtellerpaket 27, das sich zwischen dem Kopf des Schraubbolzens 23 und dem Steg 21 c befindet, aufrechterhalten wird.

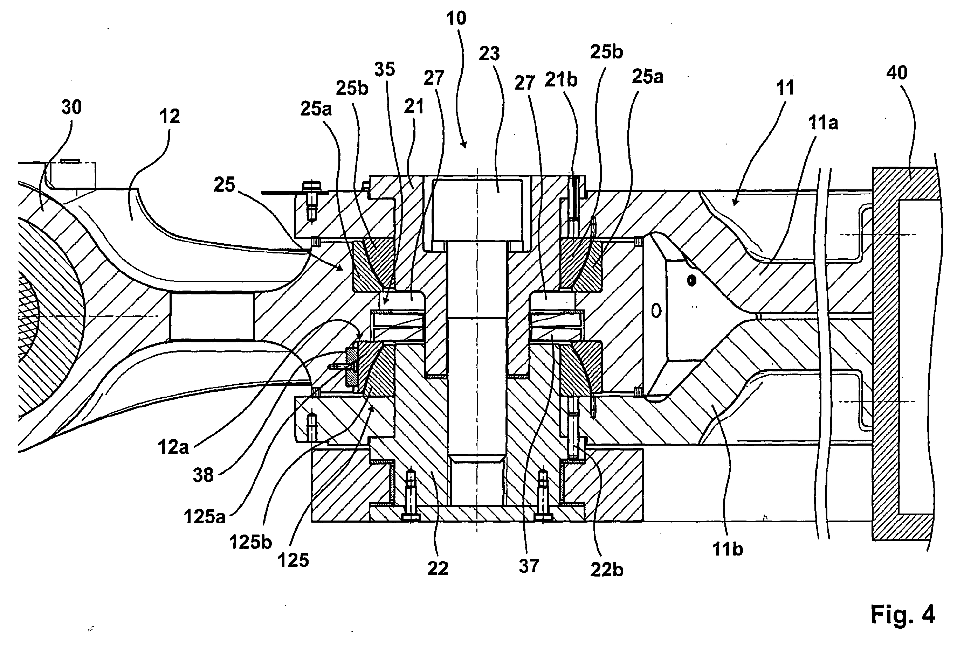

Die Ausführungsform gemäß Figur 4 unterscheidet sich von der Ausführungsform gemäß den Figuren 2 und 3 im Prinzip durch den Einsatz zweier sogenannter sphärischer Lager 25, die in Achsrichtung des Knicklagers, also in Richtung der Drehachse des Knicklagers, übereinander angeordnet sind. Die beiden Gelenksegmente 11 und 12 sind hierbei durch die beiden sphärischen Lager 25 drehgelenkig verbunden. Im Einzelnen erfolgt die Verbindung hierbei derart, dass das eine Gelenksegment 12 eine Bohrung 35 aufweist, die schlussendlich der Aufnahme des Knicklagers dient. Im Bereich der Bohrung 35 weist das Gelenksegment 12 einen umlaufenden Bund 12a auf. Auf dem Bund 12a lagern die Lagerschalen 25a, 125a des sphärischen Lagers 25, 125. Die jeweils korrespondierende Lagerschale 25b, 125b eines jeden sphärischen Lagers 25, 125 liegt an dem anderen Gelenksegment 11 an, wie sich dies unmittelbar in Anschauung von Figur 4 ergibt.

Zur Herstellung der drehgelenkigen Verbindung zwischen den beiden Gelenksegmenten 11 und 12 ist nunmehr der Schraubbolzen 23 vorgesehen sowie die Achshülse 21 und die Kontermutter 22, wobei die Achshülse 21 und die Kontermutter 22 durch den Schaubbolzen 23 miteinander in Verbindung stehen. Im Bereich des umlaufenden Bundes 12a wird durch die Achshülse 21 und die Kontermutter 22 ein Raum gebildet, der im Folgenden als Federkammer 27 bezeichnet wird, und in dem das Tellerfederpaket 37 als Federeinrichtung einsitzt. Die Anordnung der beiden Lagerschalen 125a, 125b des Loslagers 125 ist hierbei derart, dass das Tellerfederpaket auf die Lagerschale 125a wirkt und diese Lagerschale 125a durch die Kraft des Tellerfederpaketes 37 gegen die jeweiligen Lagerschalen 125b gepresst gehalten wird. Hierdurch wird durch Verschleiß entstehendes Spiel an der Berührungsfläche der beiden Lagerschalen 125a und 125b ausgeglichen bzw. kompensiert. Verdrehsicher gehalten wird das Loslager 125 durch die Passfeder 38.

Im Übrigen gilt, dass Bezugszeichen für gleiche Gegenstände in den Figuren 2, 3 und 4 gleichgehalten sind:

## Patentansprüche

1. Gelenk (1) zwischen zwei gelenkig miteinander verbundenen Fahrzeugteilen (2, 3), z. B. eines Gelenkfahrzeugs, aufweisend ein Knickgelenk (10), wobei das Knickgelenk (10) zwei Gelenksegmente (11, 12) umfasst, die um eine als vertikale Achse wirkende Spanneinrichtung (20) drehbar miteinander verbunden sind, wobei das eine erste Gelenksegment (11) eine U-förmige, maulartige Öffnung (13) zum Erfassen des anderen, zweiten Gelenksegments (12) im Bereich der vertikalen Achse aufweist, wobei zwischen den Gelenksegmenten (11, 12) zumindest in Richtung der Gelenkachse wirkende Gleiteinrichtungen (16) vorgesehen sind,
**dadurch gekennzeichnet,**
**dass** die Spanneinrichtung (20) Mittel zur Erzeugung einer Vorspannung auf die Gelenksegmente (11, 12) aufweist, wobei das eine Gelenksegment (11) zwei Gelenksegmentelemente (11 a, 11 b) aufweist, die gesondert jeweils an dem Rahmen (40) des Fahrzeugteils (3) durch Schrauben befestigt sind.

2. Gelenk nach Anspruch 1,
**dadurch gekennzeichnet,**
**dass** die Spanneinrichtung (20) eine Achshülse (21) und eine Kontermutter (22) umfasst, wobei die Achshülse (21) mit der Kontermutter (22) verbunden ist.

3. Gelenk nach Anspruch 2,
**dadurch gekennzeichnet,**
**dass** die Achshülse (21) mit der Kontermutter (22) durch einen Schraubbolzen (23) verbunden ist, wobei durch den Schraubbolzen (23) die beiden Gelenksegmente (11, 12) gegen die Kraft einer Federeinrichtung (18, 27) vorspannbar sind.

4. Gelenk nach einem der Ansprüche 2 bis 3,
**dadurch gekennzeichnet,**
**dass** die Achshülse (21) einen Bund (21 a) aufweist.

5. Gelenk nach einem der Ansprüche 2 bis 4,
**dadurch gekennzeichnet,**
**dass** die Kontermutter (22) einen Bund (22a) aufweist.

6. Gelenk nach einem der Ansprüche 3 bis 5
**dadurch gekennzeichnet,**
**dass** die Achshülse (21) auf der Innenmantelfläche einen umlaufenden Steg (21 c) zur Auflage für den Kopf des Schraubbolzen (23) aufweist.

7. Gelenk nach einem der voranstehenden Ansprüche
**dadurch gekennzeichnet,**
**dass** das zweite Gelenksegment (12) im Bereich der Spanneinrichtung (20) auf der Ober- und Unterseite einen kreisringförmigen Absatz (14) zur Aufnahme jeweils einer Druckscheibe (15) aufweist, wobei die Druckscheibe (15) durch mindestens eine, aus Gleichgewichtsgründen vorzugsweise drei, umfangsverteilt angeordnete Federeinrichtungen (18) in Richtung auf das erste Gelenksegment (11) zu pressbar sind, wobei zwischen Druckscheibe (15) und dem ersten Gelenksegment (11) eine Gleiteinrichtung (16) vorgesehen ist.

8. Gelenk nach Anspruch 7,
**dadurch gekennzeichnet,**
**dass** die Gleiteinrichtung (16) als Anlaufscheibe ausgebildet ist.

9. Gelenk nach Anspruch 7,
**dadurch gekennzeichnet,**
**dass** die Federeinrichtung (18) mehrere umfangsverteilt angeordnete Tellerfederpakete umfasst.

10. Gelenk nach Anspruch 9,
**dadurch gekennzeichnet,**
**dass** das Tellerfederpaket (18) durch einen Führungsbolzen (19) geführt ist.

11. Gelenk nach Anspruch 9,
**dadurch gekennzeichnet,**
**dass** das Tellerfederpaket (18) in einem unter der Druckscheibe (15) angeordneten Nest (17) einsitzt.

12. Gelenk nach Anspruch 2,
**dadurch gekennzeichnet,**
**dass** zwischen der Achshülse (21) und dem zweiten Gelenksegment (12) eine Gleitbuchse (24) vorgesehen ist.

13. Gelenk nach Anspruch 6,
**dadurch gekennzeichnet,**
**dass** zwischen Schraubbolzen (23) und Steg (21c) eine Federeinrichtung (27) angeordnet ist.

14. Gelenk nach Anspruch 13,
**dadurch gekennzeichnet,**
**dass** die Federeinrichtung (27) als Tellerfederpaket ausgebildet ist.

15. Gelenk nach einem der voranstehenden Ansprüche 13 und 14,
**dadurch gekennzeichnet,**
**dass** die zwischen den Gelenksegmenten (11, 12) angeordneten Gleiteinrichtungen (16) als Anlaufscheiben ausgebildet sind.

16. Gelenk nach einem der voranstehenden Ansprüche 13 bis 15,
**dadurch gekennzeichnet,**
**dass** zwischen der Achshülse (21) und dem zweiten Gelenksegment (12) eine Gleitbuchse (24) vorgesehen ist.

17. gelenk nach einem der Ansprüche2 bis 16,
**dadurch gekennzeichnet,**
**dass** die Achshülse (21) an dem ersten Gelenksegment (11) unverdrehbar (21a) festlegbar ist.

18. Gelenk nach einem der Ansprüche 2 bis 17,
**dadurch gekennzeichnet,**
**dass** die Kontermutter (22) an dem ersten Gelenksegment (11) unverdrehbar festlegbar ist.

19. Gelenk nach einem der voranstehenden Ansprüche,
**dadurch gekennzeichnet,**
**dass** die Gleiteinrichtungen (16) mindestens zwei sphärische Lager (25, 125) umfassen.

20. Gelenk nach Anspruch 19,
**dadurch gekennzeichnet,**
**dass** das sphärische Lager (25) als Gleitlager ausgebildet ist.

21. Gelenk nach Anspruch 19,
**dadurch gekennzeichnet,**
**dass** das sphärische Lager zwei Lagerschalen (25a, 25b) umfasst, wobei die beiden Lagerschalen bogenförmig ausgebildete, aneinander anliegende Gleitflächen aufweisen.

22. Gelenk nach Anspruch 21,
**dadurch gekennzeichnet,**
**dass** zur Erzeugung einer Spielfreiheit zwei in Achsrichtung des Knickgelenks einander gegenüberliegende Lagerschalen (25a, 25b) der beiden Gleitlager (25) unter der Kraft einer Federeinrichtung (37) stehen.

23. Gelenk nach Anspruch 22,
**dadurch gekennzeichnet,**
**dass** das durch die Federeinrichtung (37) beaufschlagte sphärische Lager (125) als Loslager, während das andere sphärische Lager (25) als Festlager ausgeführt ist.

24. Gelenk nach Anspruch 23,
**dadurch gekennzeichnet,**
**dass** das Loslager (125) durch eine Passfeder (38) verdrehgesichert ist.

## Claims

1. Joint (1) between two pivotably interconnected vehicle parts (2, 3), for example an articulated vehicle, comprising an articulation joint (10), wherein the articulation joint (10) comprises two joints segments (11, 12) which are connected together to be rotatable about a clamping device (20) acting as a vertical axle, wherein one, first joint segment (11) has a U-shaped mouth-like opening (13) for grasping the other, second joint segment (12) in the region of the vertical axle, wherein slide devices (16) acting at least in the direction of the joint axis are provided between the joint segments (11, 12), **characterised in that** the clamping device (20) comprises means for producing a bias on the joint segments (11, 12), wherein one joint segment (11) has two joint segment elements (11 a, 11 b), which are respectively separately fastened to the frame (40) of the vehicle parts (3) by screws.

2. Joint according to claim 1, **characterised in that** the clamping device (20) comprises an axle sleeve (21) and a locknut (22), wherein the axle sleeve (21) is connected with the locknut (22).

3. Joint according to claim 2, **characterised in that** the axle sleeve (21) is connected with the locknut (22) by a screw-bolt (23), wherein the two joint segments (11, 12) can be biassed by the screw-bolt (23) against the force of a spring device (18, 27).

4. Joint according to one of claims 2 and 3, **characterised in that** the axle sleeve (21) has a collar (21 a).

5. Joint according to any one of claims 2 to 4, **characterised in that** the locknut (22) has a collar (22a).

6. Joint according to any one of claims 3 to 5, **characterised in that** the axle sleeve (21) has on the inner circumferential surface an encircling web (21 c) for support of the head of the screw-bolt (23).

7. Joint according to any one of the preceding claims, **characterised in that** the second joint segment (12) has in the region of the clamping device (20) on the upper side and lower side a circularly annular projection (14) for reception of a respective pressure disc (15), wherein the pressure disc (15) can be pressed in direction towards the first joint segment (11) by at least one spring device (18), preferably - for reasons of weight distribution - three spring devices (18) arranged to be circumferentially distributed, wherein a slide device (16) is provided between pressure disc (15) and the first joint segment (11).

8. Joint according to claim 7, **characterised in that** the slide device (16) is constructed as a thrust washer.

9. Joint according to claim 7, **characterised in that** the spring device (18) comprises a plurality of plate spring packets arranged to be circumferentially distributed.

10. Joint according to claim 9, **characterised in that** the plate spring packet (18) is guided by a guide pin (19).

11. Joint according to claim 9, **characterised in that** the plate spring packet (18) is seated in a nest (17) arranged under the pressure disc (15).

12. Joint according to claim 2, **characterised in that** a slide bush (24) is provided between the axle sleeve (21) and the second joint segment (12).

13. Joint according to claim 6, **characterised in that** a spring device (27) is arranged between screw-bolt (23) and web (21 c).

14. Joint according to claim 13, **characterised in that** the spring device (27) is constructed as a plate spring packet.

15. Joint according to one of the preceding claims 13 and 14, **characterised in that** the slide devices (16) arranged between the joint segments (11, 12) are constructed as thrust washers.

16. Joint according to one of the preceding claims 13 to 15, **characterised in that** a slide bush (24) is provided between the axle sleeve (21) and the second joint segment (12).

17. Joint according to any one of claims 2 to 16, **characterised in that** the axle sleeve (21) is non-rotatably fastenable (21 a) to the first joint segment (11).

18. Joint according to any one of claims 2 to 17, **characterised in that** the locknut (22) is non-rotatably fastenable to the first joint segment (11).

19. Joint according to any one of the preceding claims, **characterised in that** the slide devices (16) comprise at least two spherical bearings (25, 125).

20. Joint according to claim 19, **characterised in that** the spherical bearing (25) is constructed as a slide bearing.

21. Joint according to claim 19, **characterised in that** the spherical bearing comprises two bearing shells (25a, 25b), wherein the two bearing shells have slide surfaces of curved form bearing against one another.

22. Joint according to claim 21 **characterised in that** for generating a freedom from play two bearing shells (25a, 25b), which are opposite one another in axial direction of the articulation joint, of the two slide bearings (25) are disposed under the force of a spring device (37).

23. Joint according to claim 22, **characterised in that** the spherical bearing (125) acted on by the spring device (37) is constructed as a movable bearing, whilst the other spherical bearing (25) is constructed as a fixed bearing.

24. Joint according to claim 23, **characterised in that** the movable bearing (125) is rotationally secured by a key (38).

## Revendications

1. Articulation (1) entre deux parties de véhicule (2, 3), par exemple entre deux parties d'un véhicule articulé, présentant une articulation pivotante (10), dans laquelle l'articulation pivotante (10) comprend deux segments d'articulation (11, 12) qui sont reliés l'un à l'autre avec possibilité de rotation par un dispositif de serrage (20) agissant autour d'un axe vertical, le premier segment d'articulation (11) comportant une ouverture en U (13) formant mâchoire pour s'emboîter avec l'autre, ou second segment d'articulation (12) dans la région de l'axe vertical, et dans laquelle des organes antifriction (16) agissent au moins selon la direction de l'axe d'articulation sont prévus entre les segments d'articulation (11, 12),
**caractérisée en ce que**
le dispositif de serrage (20) comporte des moyens servant à produire une précontrainte exercée sur les segments d'articulation (11, 12), l'un (11) des segments d'articulation comportant deux éléments de segments d'articulation (11a, 11 b) qui sont fixés individuellement au châssis (40) de la partie de véhicule (3) par boulonnage.

2. Articulation selon la revendication 1,
**caractérisée en ce que**
le dispositif de serrage (20) comprend une douille d'axe (21) et un contre-écrou (22), la douille d'axe (21) étant assemblée au contre-écrou (22).

3. Articulation selon la revendication 2,
**caractérisée en ce que**
la douille d'axe (21) est assemblée au contre-écrou (22) par un boulon fileté (23), les deux segments d'articulation (11, 12) pouvant être mis sous précontrainte par le boulon fileté (23) à l'encontre de la force d'un organe élastique (18, 27).

4. Articulation selon l'une des revendications 2 à 3,
**caractérisée en ce que**
la douille d'axe (21) comporte une embase (21 a).

5. Articulation selon l'une des revendications 2 à 4,
**caractérisée en ce que**
le contre-écrou (22) comporte une embase (22a).

6. Articulation selon l'une des revendications 3 à 5,
**caractérisée en ce que**
la douille d'axe (21) comporte, sur sa surface latérale intérieure, une nervure circonférentielle (21 c) servant d'appui pour la tête du boulon fileté (23).

7. Articulation selon l'une des revendications précédentes,
**caractérisée en ce que,**
dans la région du dispositif de serrage (20), le second segment d'articulation (12) comporte, sur le côté supérieur et sur le côté inférieur, un décrochement (14) en couronne de cercle servant à recevoir à chaque fois une rondelle de pression (15), les rondelles de pression (15) pouvant être repoussées en direction du premier segment d'articulation (11) par au moins un organe élastique, de préférence, pour des raisons d'équilibrage, par trois organes élastiques (18) répartis sur la circonférence, un organe antifriction (16) étant prévu entre la rondelle de pression (15) et le premier segment d'articulation (11).

8. Articulation selon la revendication 7,
**caractérisée en ce que**
l'organe antifriction (16) est constitué par une rondelle d'usure.

9. Articulation selon la revendication 7,
**caractérisée en ce que**
l'organe élastique (18) comprend plusieurs paquets de rondelles Belleville répartis sur la périphérie.

10. Articulation selon la revendication 9,
**caractérisée en ce que**
le paquet de rondelles Belleville (18) est guidé par une cheville de guidage (19).

11. Articulation selon la revendication 9,
**caractérisée en ce que**
le paquet de rondelles Belleville (18) est encastré dans une cavité (17) ménagée sous la rondelle de pression (15).

12. Articulation selon la revendication 2,
**caractérisée en ce que**
un coussinet antifriction (24) est prévu entre la douille d'axe (21) et le second segment d'articulation (12).

13. Articulation selon la revendication 6,
**caractérisée en ce que**
un organe élastique (27) est disposé entre le boulon fileté (23) et la nervure (21 c).

14. Articulation selon la revendication 13,
**caractérisée en ce que**
l'organe élastique (27) est constitué par un paquet de rondelles Belleville.

15. Articulation selon l'une des revendications précédentes 13 et 14,
**caractérisée en ce que**
les organes antifriction (16) disposés entre les segments d'articulation (11, 12) sont constitués par des rondelles d'usure.

16. Articulation selon l'une des revendications précédentes 13 à 15,
**caractérisée en ce que**
un coussinet antifriction (24) est prévu entre la douille d'axe (21) et le second segment d'articulation (12).

17. Articulation selon l'une des revendications 2 à 16,
**caractérisée en ce que**
la douille d'axe (21) peut être bloquée en rotation (21 a) sur le premier segment d'articulation (11).

18. Articulation selon l'une des revendications 2 à 17,
**caractérisée en ce que**
le contre-écrou (22) peut être bloqué en rotation sur le premier segment d'articulation (11).

19. Articulation selon l'une des revendications précédentes,
**caractérisée en ce que**
les organes antifriction (16) comprennent au moins deux paliers sphériques (25, 125).

20. Articulation selon la revendication 19,
**caractérisée en ce que**
le palier sphérique (25) est constitué par un palier lisse.

21. Articulation selon la revendication 19,
**caractérisée en ce que**
le palier sphérique comprend deux coquilles de palier (25a, 25b), les deux coquilles comportant des surfaces de glissement en forme d'arc, en appui l'une contre l'autre.

22. Articulation selon la revendication 21,
**caractérisée en ce que**
pour assurer l'absence de jeu, deux coquilles de palier (25a, 25b) des deux paliers lisses (25) qui se font mutuellement face dans la direction axiale de l'articulation de lacet sont soumises à la force d'un organe élastique (37).

23. Articulation selon la revendication 22,
**caractérisée en ce que**
le palier sphérique (125) sollicité par l'organe élastique (37) est constitué par un palier libre, tandis que l'autre palier sphérique (25) est constitué par un palier fixe.

24. Articulation selon la revendication 23,
**caractérisée en ce que**
le palier libre (125) est bloqué en rotation par une clavette (38).
